# EUROPÄISCHE PATENTSCHRIFT

(11) **EP 2 834 573 B1**
(45) Veröffentlichungstag und Bekanntmachung des Hinweises auf die Patenterteilung: **27.07.2016**
(21) Anmeldenummer: 13707315.1
(22) Anmeldetag: 20.02.2013
(51) Int. Cl.: F24H 9/20, F24D 19/10, G06Q 50/06, H02J 3/14

(54) **SYSTEM ZUR BEREITSTELLUNG VON WÄRME UND BETRIEBSVERFAHREN FÜR EIN SOLCHES SYSTEM**
SYSTEM FOR PROVIDING HEAT AND OPERATING METHOD FOR SUCH A SYSTEM
SYSTÈME DE FOURNITURE DE CHALEUR ET PROCÉDÉ PERMETTANT DE FAIRE FONCTIONNER LEDIT SYSTÈME

(30) Priorität: 20.02.2012 DE 102012003227
(43) Veröffentlichungstag der Anmeldung: 11.02.2015
(73) Patentinhaber: SMA Solar Technology AG, 34266 Niestetal (DE)
(72) Erfinder: MAGNUSSEN, Björn, 34131 Kassel (DE)
(86) Internationale Anmeldenummer: PCT/EP2013/053355
(87) Internationale Veröffentlichungsnummer: WO 2013/124302

(56) Entgegenhaltungen:
- WO-A1-2012/162763
- AT-A4- 509 882
- US-A1- 2011 272 117
- JOE QIN S ET AL: "A survey of industrial model predictive control technology", CONTROL ENGINEERING PRACTICE, PERGAMON PRESS, OXFORD, GB, Bd. 11, 1. Januar 2003 (2003-01-01), Seiten 733-764, XP002435295, ISSN: 0967-0661, DOI: 10.1016/S0967-0661(02)00186-7

## Beschreibung

### TECHNISCHES GEBIET DER ERFINDUNG

Die Erfindung betrifft ein System zur Bereitstellung von Wärme, sowie einem Betriebsverfahren hierfür.

### STAND DER TECHNIK

Herkömmliche Wärmeerzeugungs- und speichersysteme, beispielsweise Systeme zur Bereitstellung von Warmwasser mit einem Heizkessel und einem Warmwasserspeicher, weisen einen Temperatursensor auf, der eine Temperatur des Wassers innerhalb des Warmwasserspeichers misst. Aus diesem Messwert kann ermittelt werden, ob der Wärmespeicher vollständig geladen ist. Eine Erkennung eines weitgehend entleerten Wärmespeichers ist ebenfalls schon mit diesem einen Temperatursensor möglich und kann durch weitere Temperatursensoren verbessert werden. Ein Aufladen des Wärmespeichers kann regelmäßig, z.B. einmal am Tag erfolgen, bei Nutzung von elektrisch betriebenen Wärmeerzeugern bevorzugt nachts, und kann im Falle eines entleerten Wärmespeichers z.B. bei Unterschreiten eines Grenzwertes für die Temperatur ausgelöst werden. Dabei wird vorausgesetzt, dass der Ladezustand des Warmwasserspeichers direkt mit der gemessenen Wassertemperatur korreliert.

Desweiteren ist bekannt, Wärmeerzeugungs- und speichersysteme mit elektrisch betriebenen Wärmeerzeugern, insbesondere mit Wärmepumpen, als hinsichtlich der Betriebszeiträume verschiebbare Lasten in ein Energiemanagementsystem einzubinden, um Vorteile hinsichtlich optimaler Energiekosten und eines verbesserten Netzmanagements zu erzielen.

Warmwasserspeicher werden bevorzugt derart konstruiert, dass sich das einfließende kalte Wasser so wenig wie möglich mit dem gespeicherten heißen Wasser vermischt. Dadurch wird erreicht, dass ein solcher Wärmespeicher längere Zeit Wasser mit ausreichend hoher Temperatur abgeben kann. Der im Wärmespeicher integrierte Temperatursensor gewährleistet dabei durch seine Positionierung, dass ein Aufladen des Wärmespeichers dann erfolgt, wenn nur noch wenig Wasser ausreichender Temperatur zur Verfügung steht.

Der Begriff Wärmespeicher umfasst Warmwasserspeicher, aber auch solche Wärmespeicher, bei denen die zugeführte Wärmeenergie zumindest zeitweise durch andere Medien, beispielsweise Öl, Sole oder Stein, aufgenommen wird und wieder an ein anderes Medium wie Wasser oder Luft zur Übertragung der Wärme an einen an den Wärmespeicher angeschlossenen Verbraucher abgegeben wird. Im Fall von flüssigen Medien wie Sole oder Öl ist hierbei aber auch eine direkte Wärmeübertragung an den Verbraucher denkbar.

Aussagen über den Ladezustandes des Wärmespeichers, umfassend den Füllgrad des Wärmespeichers und/oder den Temperaturgradienten bzw. andere Parameter zur Beschreibung der Temperaturverteilung im Wärmespeicher, sind auf Basis der Temperaturmessung allerdings nicht möglich. Zudem kann ein vorzeitiges, z.B. turnusmäßiges Aufladen zu unnötigen Leerlaufverlusten führen, wenn für einen längeren Zeitraum nach dem Aufladen keine Wärmeenergie entnommen wird.

Ein typisches System zur Bereitstellung von Wärme ist in der AT 509882 A4 gezeigt.

### AUFGABE DER ERFINDUNG

Der Erfindung liegt die Aufgabe zugrunde, ein System, sowie ein Verfahren zum Betrieb eines Systems zur Bereitstellung von Wärme aufzuzeigen, die einen hinsichtlich des Energiebedarfs und der Betriebskosten verbesserten Einsatz von Wärmeerzeugern ermöglichen.

### LÖSUNG

Die Aufgabe der Erfindung wird durch ein Verfahren mit den Merkmalen des unabhängigen Patentanspruches 1 und ein System mit den Merkmalen des unabhängigen Patentanspruches 10 gelöst. Bevorzugte Ausführungsformen sind in den abhängigen Patentansprüchen definiert.

### BESCHREIBUNG DER ERFINDUNG

Das erfindungsgemäße Verfahren zum Betrieb eines Systems zur Bereitstellung von Wärme umfassend einen von einer Photovoltaik-Anlage gespeisten Wärmeerzeuger un einen Warmespeicher, mit einer Messeinrichtung zur Bestimmung der Temperatur an einem Punkt im Wärmespeicher oder in einer daran angeschlossenen Rohrleitung und einer Kommunikationsverbindung zu einer die Verwendung der elektrischen Leistung der PV-Anlage verwaltenden Steuereinrichtung, ist gekennzeichnet durch die folgenden Schritte:
- Ermitteln einer von dem Wärmeerzeuger in den Wärmespeicher eingebrachten Energiemenge,
- Ermitteln eines Zeitverlaufes einer an mindestens einer Entnahmestelle aus dem Wärmespeicher entnommenen Energiemenge,
- Ermitteln eines Ladezustandes des Wärmespeichers,
- Erstellen einer Prognose eines Zeitverlaufes einer zukünftigen Energieentnahme an der Entnahmestelle, und
- Erstellen eines Betriebsplanes für den Wärmeerzeuger anhand von mindestens einem der Parameter Temperatur, Ladezustand und prognostizierter Energieentnahme.

Mit Hilfe dieser Schritte werden die für die Betriebsplanung wesentlichen Informationen über die Energieentnahme in der Vergangenheit, den aktuellen Ladezustand des Wärmespeichers (z.B. Füllgrad und Temperaturgradient), sowie die voraussichtliche Energieentnahme in der Zukunft verfügbar. Diese Informationen ermöglichen dann das Erstellen eines Betriebsplanes für den Wärmeerzeuger, der gewährleistet, dass zu jedem Zeitpunkt ausreichend Wärmeenergie für einen komfortablen Betrieb des Wärmeerzeugungs- und speichersystems bereitgestellt wird. Dazu bestimmt der Betriebsplan, wann der Wärmespeicher aus welcher Energiequelle geladen wird. Beispielsweise kann es besonders günstig sein, den Wärmespeicher so spät wie möglich aufzuladen, um unnötige Speicherverluste in Leerlaufphasen ohne Energieentnahme zu vermeiden.

Konkret wird zunächst eine Verlustleistung des Wärmespeichers aus einem Zeitverlauf der bevorzugt fortlaufend gemessenen Temperatur ermittelt wird. Dazu werden bevorzugt Zeitverläufe der Temperatur in Zeiträumen analysiert, in denen weder Energiezufuhr noch Energieentnahme stattfinden, beispielsweise nachts, so dass ausschließlich die Verlustleistung des Wärmespeichers einen Einfluss auf den Ladezustand ausübt. Die zu analysierenden Zeiträume können auch von einem Nutzer definiert werden oder aus den Betriebszuständen des Wärmeerzeugers und an die Entnahmestellen angeschlossenen Verbraucher bestimmt werden. Sofern der Wärmespeicher eine vernachlässigbare Verlustleistung aufweist, kann auf deren Bestimmung auch verzichtet werden und die Temperatur ohne Energiezufuhr und ohne Energieentnahme als konstant angesehen werden.

Der Zeitverlauf der entnommenen Energiemenge kann ebenfalls aus dem Zeitverlauf der gemessenen Temperatur ermittelt werden. Dazu kann der Zeitverlauf der Temperatur mit dem vorab ermittelten Zeitverlauf der Temperatur ohne Energieentnahme verglichen werden, wobei ein schnelleres Absinken der Temperatur auf eine Energieentnahme hindeutet. Zusätzlich können damit sowohl Füllgrad als auch der Temperaturgradient im Wärmespeicher und somit der Ladezustand des Wärmespeichers ermittelt werden, wobei eine weiter erhöhte Genauigkeit dieser Parameter durch Verwendung eines generischen Modells erzielt werden kann.

Ein solches generisches Modell des Wärmespeichers kann durch ein Lernverfahren an ein reales Verhalten des Wärmespeichers angepasst werden, wozu bevorzugt der Zeitverlauf der gegebenenfalls fortlaufend gemessenen Temperatur verwendbar ist, der unter Berücksichtigung der physikalischen Eigenschaften des Wärmespeichers analysiert wird und ein Ermitteln des Ladezustandes und der Energieentnahme aus dem Wärmespeicher erlaubt. Zwar sind sowohl das generische Modell als auch die ermittelten Parameter naturgemäß mit Unsicherheiten behaftet, erlauben aber dennoch eine Definition einer Anzahl an hinreichend genauen Parametern, die zur Erstellung des Betriebsplanes für die Wärmeerzeuger verwendbar sind.

Eine weiter erhöhte Genauigkeit des generischen Modells kann erreicht werden, indem das Modell explizite Informationen über die in den Wärmespeicher eingebrachte Energiemenge enthält. Diese Informationen können beispielsweise Betriebszustände des Wärmeerzeugers sein, welche neben den Zeiträumen des Betriebs von Wärmeerzeugern auch Werte der in diesen Zeiträumen gegebenenfalls variablen Wärmeleistung der Wärmeerzeuger umfassen.

Eine weiter erhöhte Genauigkeit des generischen Modells kann erreicht werden, indem das Modell explizite Informationen über die dem Wärmespeicher entnommene Energiemenge enthält. Diese Informationen, sowohl bezüglich der zugeführten, als auch der entnommenen Wärmemenge, können beispielsweise Messwerte von Sensoren sein, welche die Durchflussrate und/oder die Temperatur in den an den Wärmespeicher angeschlossenen Rohrleitungen umfassen.

Sowohl die Informationen über die eingebrachten als auch die Informationen über die entnommenen Energiemengen können dem generischen Modell durch ein Übermitteln von Betriebsdaten von Wärmeerzeugern bzw. Verbrauchern zugänglich gemacht werden. In einem zusätzlichen Schritt im Rahmen des Lernverfahrens können definierte Energiemengen von den Wärmeerzeugern in den Wärmespeicher eingebracht und/oder von den Verbrauchern aus dem Wärmespeicher entnommen werden. Durch einen solchen Kalibriervorgang, der insbesondere direkt nach der Installation des Wärmeerzeugungs- und speichersystems oder auch periodisch wiederholend durchgeführt werden kann und beispielsweise das gezielte, d.h. bedarfsunabhängige Ein- und Ausschalten eines Wärmeerzeugers bzw. eines Verbrauchers umfassen kann, wird die Genauigkeit des generischen Modells weiter erhöht, indem eine direkte Korrelation zwischen Zeitverläufen der eingebrachten bzw. entnommenen Energiemenge und Zeitverläufen der Temperatur hergestellt wird.

Zum Erstellen des Betriebsplanes für die Wärmeerzeuger kann bevorzugt ein voraussichtlicher Zeitverlauf einer zukünftigen Energieentnahme anhand einer statistischen Auswertung der Zeitverläufe der in der Vergangenheit entnommenen Energiemengen ermittelt werden. Dabei kann ausgenutzt werden, dass der Verbrauch von Wärmeenergie, insbesondere von Warmwasser in der Regel einen zyklischen Charakter besitzt, d.h. sich im Verlaufes eines Tages, einer Woche oder eines Jahres eine wiederkehrende Nutzungsstatistik ausbildet. Daher kann mit Hilfe einer Analyse der Nutzungsstatistik unter Beachtung der Regeln der Wahrscheinlichkeit auf das zukünftige Nutzungsverhalten und damit auf den voraussichtlichen Zeitverlauf der zukünftigen Energieentnahme geschlossen werden, der wiederum beim Erstellen des Betriebsplanes für den oder die Wärmeerzeuger berücksichtigt wird.

Für das Erstellen des Betriebsplanes kann weiterhin ein aktueller oder ein prognostizierter Energiebezugspreis berücksichtigt werden. Dies ist besonders vorteilhaft, wenn der Energiebezugspreis aufgrund einer variablen Tarifgestaltung abhängig von der Tageszeit, dem Wochentag, der Jahreszeit und/oder aktuellen Parametern eines Versorgungsnetzes wie Auslastung oder Grenzwertüberschreitungen (z.B. Gasdruck, Stromnetzspannung o.ä.) ist. Zusätzlich kann eine aktuelle und/oder prognostizierte Leistung einer bevorzugt in unmittelbarer Umgebung des Wärmeerzeugungs- und speichersystems, z.B. in demselben Haushalt oder zumindest in dessen Nachbarschaft, installierten erneuerbaren Energieerzeugungsanlage, insbesondere einer Photovoltaik- oder auch einer Biogasanlage oder eines Blockheizkraftwerkes, beim Erstellen des Betriebsplanes berücksichtigt werden, um die Vorteile einer dezentralen Erzeugung und unmittelbaren Nutzung der erneuerbaren Energien auszuschöpfen.

Das Erstellen des Betriebsplanes kann somit mit verschiedenen Optimierungs-Zielrichtungen erfolgen, insbesondere mit dem Ziel eines minimalen Energieeinsatzes oder mit dem Ziel einer Minimierung der Betriebskosten. Dabei können zudem aktuelle und/oder von anderen Energiemanagementsystemen geplante Betriebszustände weiterer Verbraucher außerhalb des Wärmeerzeugungs- und speichersystems berücksichtigt werden, insbesondere solcher Verbraucher, die dieselben Energiequellen wie der Wärmeerzeuger nutzen. Dadurch kann beispielsweise die Leistung einer erneuerbaren Energiequelle möglichst vollständig genutzt und/oder der Bezug von Energie aus einem Versorgungsnetz durch einen oberen Grenzwert beschränkt werden.

Die Aufgabe der Erfindung wird weiterhin durch ein System zur Bereitstellung von Wärme umfassend einen Wärmespeicher und einen von einer Photovoltaik-Anlage gespeisten Wärmeerzeuger zur Energieübertragung in dem Wärmespeicher, einer Messeinrichtung zur Bestimmung einer Temperatur im Wärmespeicher oder in einer daran angeschlossenen Rohrleitung sowie einer Entnahmestelle zur Versorgung von Verbrauchern mit Wärmeenergie gelöst, die sich durch eine Steuereinrichtung für den oder die Wärmeerzeuger auszeichnet, wobei die Steuereinrichtung zur Ermittlung eines Ladezustandes des Wärmespeichers eingerichtet ist. Das System umfasst eine Kommunikationsverbindung zu einer die Verwendung der elektrischen Leistung der Photovoltaik-Anlage verwaltenden Steuereinrichtung. Die Steuereinrichtung ist weiterhin dadurch gekennzeichnet, dass sie zur Erstellung einer Prognose eines Zeitverlaufes einer zukünftigen Energieentnahme sowie zur Erstellung eines Betriebsplanes für den Wärmeerzeuger anhand von mindestens einem der Parameter Temperatur, Ladezustand und prognostizierter Energieentnahme eingerichtet ist. Damit gewährleistet die Steuereinrichtung, dass zu jedem Zeitpunkt ausreichend Wärmeenergie für einen komfortabler Betrieb des Wärmeerzeugungs- und speichersystems verfügbar ist.

Besonders bevorzugt umfasst das System eine Anpassungseinrichtung, die zur Angleichung eines generischen Modells des Wärmespeichers an einen Realzustand des Wärmespeichers mittels Analyse eines Zeitverlaufes der Temperatur eingerichtet ist. Das derart an die Realität angepasste generische Modell stellt aktuelle und prognostizierte Parameter zur Verfügung, die von der Steuereinrichtung zur Erstellung des Betriebsplanes genutzt werden können.

Zur weiteren Optimierung des generischen Modells sowie des unter anderem darauf basierenden Betriebsplanes kann das System weitere Sensoren umfassen, die zur Bestimmung von Zeitverläufen von in den Wärmespeicher eingebrachten und/oder dem Wärmespeicher entnommenen Energiemengen eingerichtet sind. Diese Sensoren können Durchflussmengen- und/oder Temperatursensoren sein, welche jeweils in oder an einer der an den Wärmespeicher angeschlossenen Rohrleitungen angebracht sind.

Desweiteren kann die Vorrichtung Kommunikationsschnittstellen umfassen, die zur Übermittlung von Steuerbefehlen an daran angeschlossene Wärmeerzeuger und/oder Verbraucher eingerichtet sind. Damit kann die Vorrichtung eine direkte Umsetzung des erstellten Betriebsplanes durch vorhandene Betriebsmittel gewährleisten. Die Kommunikationsschnittstellen können zusätzlich zum Empfang von Informationen über aktuelle und/oder prognostizierte Energiebezugspreise eingerichtet sein, die verwendet werden können, um die aktuellen und/oder prognostizierten Betriebskosten der Wärmeerzeuger zu ermitteln.

Bevorzugt kann der Wärmeerzeuger von einer dezentralen erneuerbaren Energiequelle, insbesondere einer in unmittelbarer Umgebung des Systems installierten Photovoltaik-Anlage gespeist werden. Die von einer solchen Photovoltaik-Anlage bereitgestellte elektrische Leistung kann vorteilhaft erzeugungsnah verbraucht werden, um den Bezug von elektrischer Energie aus einem Versorgungsnetz und damit die Belastung des Versorgungsnetzes zu reduzieren. Eine Kommunikationsverbindung zwischen der Vorrichtung und einer die Verwendung der elektrischen Leistung der PV-Anlage verwaltenden Steuereinrichtung, die wiederum mit weiteren elektrischen Verbrauchern verbunden ist, kann vorteilhaft genutzt werden, um eine optimale Nutzung der dezentral erzeugten Leistung zu gewährleisten.

Die in dem generischen Modell ermittelten Parameter des Wärmespeichers können energieentnahmeunabhängige Komponenten, insbesondere ein Verlustleistung des Wärmespeichers, und energieentnahmeabhängige Komponenten, insbesondere vergangene Zeitverläufe von Energieentnahme durch Verbraucher aufweisen. Diese Unterscheidung ist hilfreich, um zum einen anhand der energieentnahmeunabhängigen Komponenten das generische Modell des Warmwasserspeichers zu optimieren und zum anderen anhand der energieentnahmeabhängigen Komponenten den Betriebsplan für den Wärmeerzeuger hinsichtlich einer für die Gewährleistung der ausreichenden Versorgung von Verbrauchern mit absehbar benötigten Energiemengen erforderlichen Energieübertragung in den Wärmespeicher in einem vorbestimmten Zeitintervall abzuleiten.

Das System kann weiterhin eine Optimierungseinrichtung aufweisen, die zur Optimierung des Betriebsplanes hinsichtlich eines optimalen Energieeinsatzes eingerichtet ist. Alternativ oder zusätzlich kann die Optimierungseinrichtung zur Optimierung des Betriebsplanes hinsichtlich minimaler Betriebskosten eingerichtet sein. In beiden Fällen ist die Optimierungseinrichtung zur Berücksichtigung der im generischen Modell enthaltenen Freiheitsgrade eingerichtet, so dass der Betrieb der Wärmeerzeuger je nach Optimierungsziel entweder vorhandene, insbesondere lokal verfügbare Ressourcen optimal nutzt oder insbesondere unter Rückgriff auf kostenpflichtige Energieentnahme aus einem Versorgungsnetz minimale Kosten verursacht.

### KURZBESCHREIBUNG DER FIGUREN

Im Folgenden wird die Erfindung anhand in den Figuren dargestellter bevorzugter Ausführungsbeispiele weiter erläutert und beschrieben.

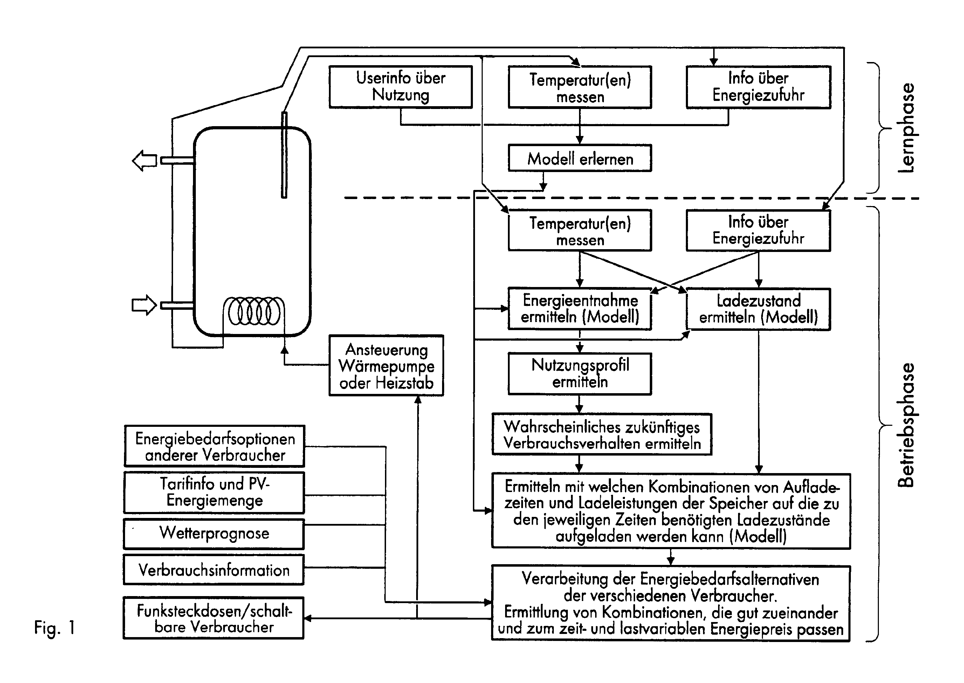

- Fig. 1: zeigt eine Ausführungsform des neuen Verfahrens,
- Fig. 1: zeigt eine Ausführungsform eines erfindungsgemäßen Systems zur Bereitstellung von Wärme,
- Fig. 3: zeigt einen Zeitverlauf einer gemessenen Temperatur in einem Wärmespeicher mit und ohne Energieentnahme,
- Fig. 4: zeigt Zeitverläufe der Temperatur sowie der anhand des Verfahrens bzw. von der Steuereinrichtung ermittelten Energieentnahme aus dem Wärmespeicher und das Nutzungsprofil des erfindungsgemäßen Systems und
- Fig. 5: zeigt anhand des Verfahrens bzw. von der Steuereinrichtung ermittelte Zeitverläufe des prognostizierten Nutzungsprofils, des voraussichtlichen Warmwasserbedarfs, den daraufhin erstellten Betriebsplan und die optimierten Schaltsignale für den Wärmeerzeuger.

### FIGURENBESCHREIBUNG

Fig. 1 zeigt ein beispielhaftes Ablaufdiagramm für das neue Verfahren am Beispiel eines Systems zur Bereitstellung von Wärme umfassend einen Warmwasserspeicher als Wärmespeicher und einen von einer Wärmepumpe versorgten oder als Heizstab ausgeführten Wärmeerzeuger, wobei im Verlaufe der Durchführung des Verfahrens zwischen einer Lernphase und einer Betriebsphase unterschieden wird. In der Lernphase werden verschiedene Informationen über aktuelle Parameter des Wärmespeichers wie die Temperatur, die aktuelle Energiezufuhr in den Wärmespeicher und Benutzerinformationen über die Nutzung, beispielsweise Programmierungen einer Heizungssteuerung mit Nachtabsenkung erfasst. Diese Informationen werden in der Lernphase verwendet, um ein generisches Modell zu erzeugen, das gegebenenfalls mit vorab bekannten Parametern des Systems wie beispielsweise Speicherinhalt, Position des Temperatursensors, Leistung der Wärmeerzeuger usw. aufgestellt wurde.

In der Betriebsphase werden weiterhin die aktuelle Temperatur gemessen beziehungsweise Informationen über die aktuelle Energiezufuhr bestimmt. Diese Informationen reichen aus, um anhand des generischen Modells den Zeitverlauf der Energieentnahme und den Ladezustand des Wärmespeichers zu ermitteln. Aus dem so ermittelten Zeitverlauf der Energieentnahme wird in den nächsten Schritten durch statistische Auswertung das Nutzungsprofil und ein wahrscheinliches zukünftiges Verbrauchsverhalten ermittelt.

Im folgenden Schritt wird unter Berücksichtigung des prognostizierten Verbrauchsverhaltens sowie des aktuellen Ladezustandes des Wärmespeichers ermittelt, mit welchen Kombinationen von Aufladezeitpunkten und Ladedauern, sowie Ladeleistungen, d.h. mit welchen durch Modifikation der Freiheitsgrade des Systems realisierbaren Betriebsplänen des Wärmeerzeugers der Wärmespeicher auf die zu den jeweiligen Zeiten benötigten Ladezustände gebracht werden kann, um das prognostizierte Verbrauchsverhalten ohne oder mit minimierten Komforteinbußen für den Nutzer zu befriedigen. Das System kann neben den oben genannten Freiheitsgraden weitere oder abgewandelte Freiheitsgrade bei der Gestaltung der Betriebspläne aufweisen.

In einem weiteren Schritt werden diesen realisierbaren Betriebsplänen mögliche Energiebedarfsalternativen der verschiedenen Verbraucher gegenüber gestellt, wobei neben den an den Wärmespeicher angeschlossenen Wärmeenergieverbrauchern optional auch die aktuellen und geplanten Energiebedarfe konkurrierender Verbraucher für elektrische Energie betrachtet werden. Zusätzlich werden zeit- und/oder lastabhängige Energiebezugspreise in die Betrachtung einbezogen, wobei hier sowohl aktuelle Preise als auch aufgrund von externen Informationen wie Wetterprognosen prognostizierte Preise verwendet werden können.

Aus diesen Berechnungen ergibt sich in einem letzten Schritt ein Betriebsplan für den Wärmeerzeuger in dem Wärmeerzeugungs- und Wärmespeichersystem, hier dargestellt als Wärmepumpe oder Heizstab, der oder die im Folgenden entsprechend dem Betriebsplan angesteuert werden. Die Ansteuerung des Wärmeerzeugers, der als schaltbarer Verbraucher ausgeführt sein kann, kann beispielsweise durch Funksteckdosen erfolgen. Ebenso können konkurrierende Verbraucher während der Betriebsphasen des Wärmeerzeugers zur Begrenzung der Belastung des Stromnetzes auf diese Weise abgeschaltet werden.

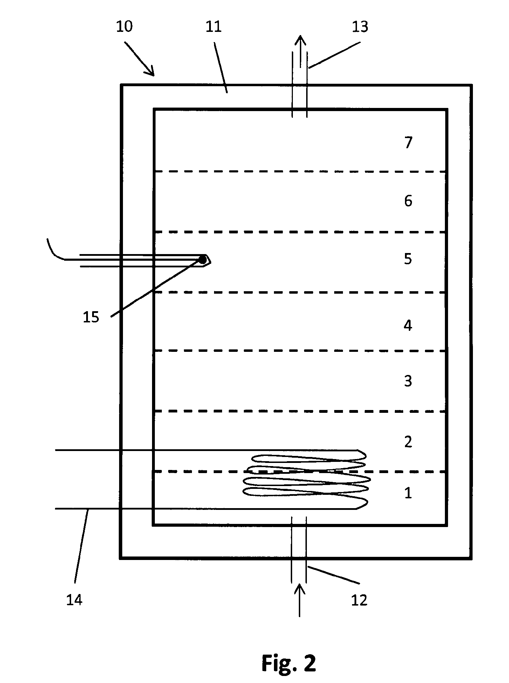

Fig. 2 zeigt ein generisches Modell eines Wärmespeichers am Beispiel eines Warmwasserspeichers 10, der durch eine Isolation 11 von der umgebenden Außenluft mit einer Temperatur T_A getrennt ist und einen Zufluss 12, eine Entnahmestelle 13, einen Wärmeerzeuger 14, in diesem Fall eine Heizspirale, sowie einen Temperatursensor 15 aufweist. Die Temperatur des Wassers im Warmwasserspeicher 10 ist in der Regel nicht homogen; vielmehr bildet sich ein Temperaturgradient, der zu der in Fig. 1 durch die Schichten 1 bis 7 angedeuteten Schichtbildung führt. Die Schichten 1 bis 7 weisen Temperaturen T_1 bis T_7 auf, die zu einem Zeitpunkt t0 beispielsweise folgende Verteilung aufweisen können:
T_1(t0)=20°C, T_2(t0)=20°C, T_3(t0)=28°C, T_4(t0)=50°C,
T_5(t0)=88°C, T_6(t0)=89°C. T_7(t0)=90°C

Unter Berücksichtigung der Zeitverläufe einer Zuflussmenge V(t) bei einer Zuflusstemperatur T_Z, der Außentemperatur T_A und dem Zeitverlauf der durch den Wärmeerzeuger 14 in den Warmwasserspeicher 10 eingebrachten Wärmemenge H(t) ergeben sich zu einem späteren Zeitpunkt t1=t0+Δt die Temperaturen T_1 bis T_7 der Schichten 1 bis 7 über folgende funktionale Zusammenhänge:
T_1(t1) = f1 (T_1(t0), T_2(t0), V(t), H(t), T_A, T_Z)
T_2(t1) = f1(T_1(t0), T_2(t0), T_3(t0), V(t), H(t), T_A, T_Z)
T_3(t1) = f1(T_2(t0), T_3(t0), T_4(t0). V(t), H(t), T_A, T_Z)
T_4(t1) = f1(T_3(t0), T_4(t0), T_5(t0), V(t), H(t), T_A, T_Z)
T_5(t1) = f1(T_4(t0), T_5(t0), T_6(t0), V(t), H(t), T_A, T_Z)
T_6(t1) = f1(T_5(t0), T_6(t0). T_7(t0). V(t), H(t), T_A. T_Z)
T_7(t1) = f1(T_6(t0), T_7(t0), V(t), H(t), T_A, T_Z)

Dieses Beispielmodell berücksichtigt sowohl die Wärmeleitung zwischen den Schichten 1 bis 7 als auch den stofflichen Wärmetransport durch eine Entnahme von Warmwasser bei gleichzeitigem Zufluss von Kaltwasser. Es ist zu bemerken, dass die Temperaturverteilung im Warmwasserspeicher10 auch eine ganze Zeit nach einer Wasserentnahme nicht homogen ist, sondern unten kalte Wasserschichten und oben heiße Wasserschichten zu finden sind. Zusätzlich kann ein stofflicher Wärmetransport durch Strömungen innerhalb des Warmwasserspeichers 10 ergänzt werden, wobei auch die Bewegungsvektoren der Wassermoleküle als Zustände auftreten oder in vereinfachter Form berücksichtigt werden könnten.

Neben den in Fig. 2 dargestellten Anschlüssen 12 und 13 können weitere Zuflüsse und Entnahmestellen vorhanden sein, deren Nutzung in analoger Form in das generische Modell integriert werden kann. Der Temperatursensor 15 im Warmwasserspeicher 10 ermöglicht die Bestimmung des Zeitverlaufes der Temperatur T_5(t) in diesem Beispiel in Schicht 5, während die Temperaturen in den anderen Schichten nicht direkt gemessen werden. Es ist zwar denkbar, weitere Temperatursensoren in den Warmwasserspeicher und/oder die Zuflüsse bzw. die Entnahmestellen zu integrieren, jedoch ist dies mit zusätzlichen Kosten verbunden und würde erst bei einer hohen Anzahl an zusätzlichen Sensoren eine vollständige Aussage über den Ladezustand des Warmwasserspeichers 10 ermöglichen.

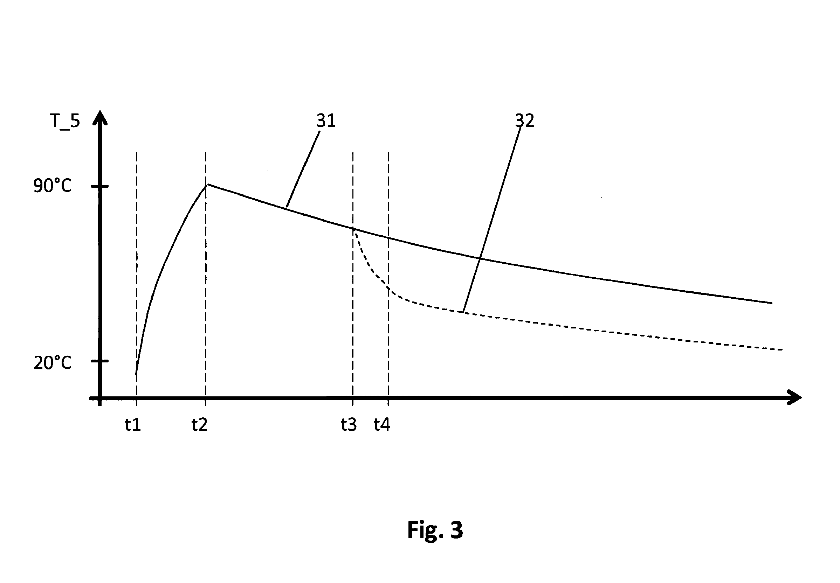

Fig. 3 zeigt verschiedene Zeitverläufe einer vom Sensor 15 fortlaufend gemessenen Temperatur T_5 der Schicht 5 im Warmwasserspeicher 10. Die Kurve 31 repräsentiert den Zeitverlauf der Temperatur ohne Energieentnahme, wobei zunächst zwischen den Zeitpunkten t1 und t2 ein Aufladen des Warmwasserspeichers 10 von einer unteren Grenztemperatur von 20°C auf eine obere Grenztemperatur von 90°C durch den Wärmeerzeuger 14 stattfindet. Dabei wird angekommen, dass der Warmwasserspeicher durch das Aufladen in einen bekannten Ladezustand gebracht wird, wie z.B. eine vollständige Erwärmung des gesamten Wassers auf die obere Grenztemperatur. Nach Erreichen der oberen Grenztemperatur entlädt sich der Warmwasserspeicher 10 langsam, indem er Wärme an die Umgebung verliert. Dieser Temperaturverlauf 31 ohne Wasserentnahme kann als Messwertfolge oder parametrisiert, z.B. in Form von durch Anpassen an exponentielle Temperaturkurven ermittelten Koeffizienten, gespeichert werden.

Erfolgt nach der Aufladung im Zeitraum der Selbstentladung an der Entnahmestelle 13 eine Wasserentnahme zwischen den Zeitpunkten t3 und t4, so erreicht das über den Zufluss 12 in den Warmwasserspeicher 10 nachfließende kalte Wasser die Schicht 5 und damit den Temperatursensor 15 zunächst nicht, da es nur unten einfließt. Durch das Verschieben der Schichten nach oben sowie die im Vergleich zur Wandisolation 11 gute Wärmeleitung zwischen warmen und kalten Wasserschichten ist jedoch ein schnelleres Absinken der Temperatur T_5 am Sensor 15 zu beobachten. Es ergibt sich ein Verlauf der Temperatur T_5 entsprechend der Kurve 32, der mit gespeicherten Verläufen verglichen wird. Weist der Zeitverlauf der Temperatur ein schnelleres Absinken der Temperatur auf als solche gespeicherten Zeitverläufe, in denen keine Energie zugeführt wurde, so weist dies auf eine Entnahme von Energie aus dem Warmwasserspeicher 10 hin. Alternativ sind auch die Analyse der Temperaturgradienten und der Vergleich mit gespeicherten Temperaturgradienten zur Erkennung der Entnahme möglich. Wartet man lange genug, so gleicht sich die Temperatur im Wärmespeicher 10 aus und es lässt sich die entnommene Wärmemenge ermitteln. Mit dieser Information lässt sich bei zukünftigen Entnahmen von Warmwasser die Entnahme von Wärme (Energie) aus dem Warmwasserspeicher schon viel früher (kurz nach der Entnahme) an der Sinkgeschwindigkeit der Temperatur ermitteln.

Ein Intervall, in dem keine Wärmeentnahme aus dem Warmwasserspeicher erfolgt, kann zusätzlich von einem Nutzer vorgegeben sein. Andererseits kann durch gezieltes Einschalten des Wärmeerzeugers 14 und damit gezieltes Einbringen von Wärmeenergie in den Warmwasserspeicher 10 ein im Vergleich zu Fig. 3 gerade umgekehrtes Verhalten des Zeitverlaufes der Temperatur verursacht werden. Durch eine Auswertung dieses Zeitverlaufes kann im Rahmen der Lernphase zusätzlich die Aufheizphase besser erlernt werden und das generische Modell des Warmwasserspeichers 10 entsprechend optimiert werden. Desweiteren können zusätzliche Sensoren zum besseren Erlernen des generischen Modells und/oder zum besseren Abgleich des Modellzustands mit der Realität verwendet werden.

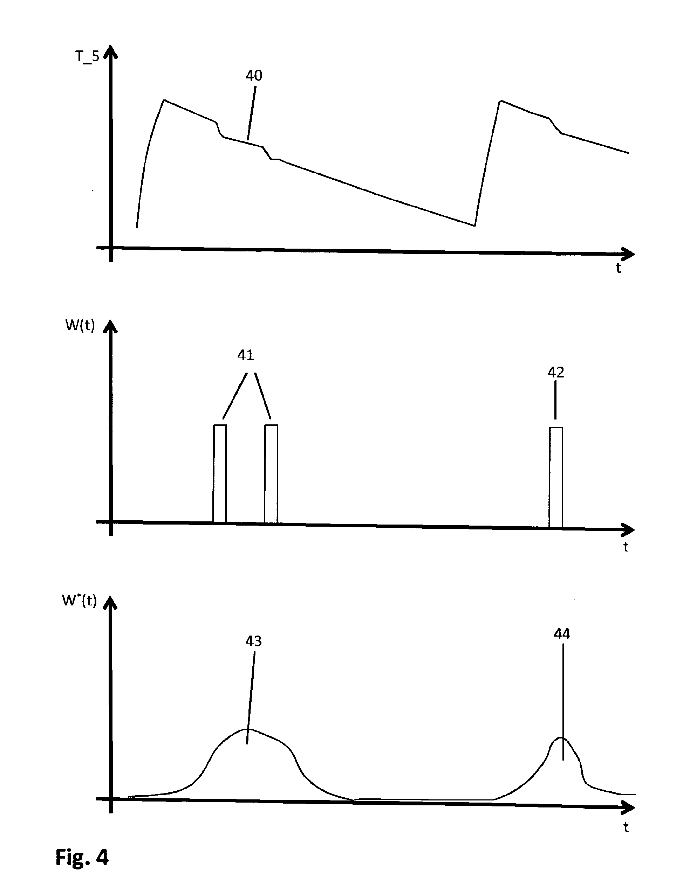

Auch die mehrfache Entnahme von Wärmemengen aus dem Warmwasserspeicher 10 kann auf diesem Weg erlernt und modelliert werden. Fig. 4 zeigt mehrere Zeitverläufe über einen im Vergleich zu Fig. 3 längeren Zeitraum, z.B. einen Tag. Die Kurve 40 in der oberen Graphik zeigt wieder den Zeitverlauf der Temperatur T_5, der vom Temperatursensor 15 in der Schicht 5 des Warmwasserspeichers 10 gemessen wird. Die mittlere Graphik in Fig. 4 zeigt einen Zeitverlauf der dem Warmwasserspeicher 10 an der Entnahmestelle 13 entnommenen Wärmeenergie W(t). Insbesondere sind Ereignisse 41 und 42 gekennzeichnet, welche die Entnahmen von Wärmeenergie in den entsprechenden Zeiträumen repräsentieren, beispielsweise morgendliche Duschvorgänge oder einen abendlichen Geschirrspülvorgang. Die Entnahme von Wärmeenergie in den Zeiträumen der Ereignisse 41, 42 führt zu einem in der oberen Graphik in Fig. 4 ersichtlichen charakteristischen schnelleren Absinken der Temperatur T_5, aus dem anhand des generischen Modells wiederum die Menge der entnommenen Wärmeenergie ermittelt werden kann.

Aus einer statistischen Analyse der derart ermittelten Zeitverläufe der Entnahme von Wärmeenergie W(t) über einen längeren Zeitraum, d.h. über mehrere Wochen oder ein Kalenderjahr lässt sich unter Berücksichtigung des Wochentages und der Jahreszeit ein Nutzerprofil W*(t) ermitteln, das in der unteren Graphik in Fig. 4 beispielhaft dargestellt ist und insbesondere regelmäßig auftretenden Ereignisse 43 und 44 abbildet, hier beispielhaft das morgendliche Duschen und das abendliche Geschirrspülen.

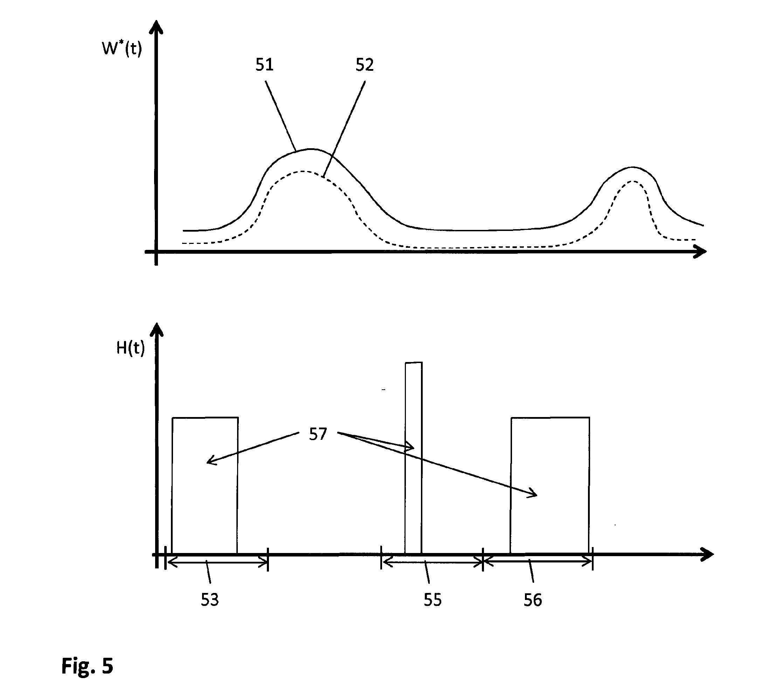

In Fig. 5 zeigt die obere Graphik den mit dem Bezugszeichen 52 bezeichneten Zeitverlauf der zukünftigen Energieentnahme, der anhand des in die Zukunft fortgeschriebenen Nutzerprofils W*(t) ermittelt wurde. Daraus wird bestimmt, wann wie viel Wasser welcher Temperatur aus dem Warmwasserspeicher 10 entnehmbar sein muss. Es ergibt sich anhand des generischen Modells der Zeitverlauf des voraussichtlichen Wärmeenergiebedarfs 51 zur Befriedigung des voraussichtlichen Bedarfs. Diese ist gegenüber der Kurve 52 um eine Sicherheitsreserve erhöht, die konstant oder von der Unsicherheit der Prognosekurve 51 abhängig sein kann.

Die untere Graphik in Fig. 5 stellt den aus den vorangegangenen Schritten ermittelten Betriebsplan für den Wärmeerzeuger 14 in Form eines Verlaufes der in den Warmwasserspeicher eingebrachten Wärmeleistung H(t) dar. Hierbei bezeichnen die Bezugszeichen 53, 55, 56 diejenigen Zeiträume in denen der Betrieb des Wärmeerzeugers 14 grundsätzlich sinnvoll ist. Im Zeitraum 55 ist der Betrieb des Wärmeerzeugers grundsätzlich möglich ist, aber angesichts der aus dem Nutzerprofil ersichtlichen voraussichtlich erst deutlich später stattfindenden Entnahme würde eine Wärmezufuhr zu unnötigen Leerlaufverlusten führen. Im Zeitraum 56 muss der Wärmeerzeuger zumindest bei Nichtnutzung des Zeitraumes 55 zur Wärmezufuhr notwendigerweise betrieben werden, um den voraussichtlichen Bedarf gesichert zu befriedigen und wird innerhalb des Betriebsplanes auch entsprechend eingesetzt, wenn der Betriebsplan anhand der im generischen Modell enthaltenen Freiheitsgrade hinsichtlich eines optimalen Energieeinsatzes optimiert wird.

Unter Berücksichtigung weiterer bekannten Rahmenbedingungen, insbesondere des aktuellen und/oder prognostizierten Energiebezugspreises, der aktuellen und/oder der prognostizierten Leistung einer den Wärmeerzeuger 14 versorgenden erneuerbaren Energieerzeugungsanlage, der aktuellen und/oder geplanten bzw. optional planbaren Betriebszustände weiterer Verbraucher und weiterer ggf. relevanter Parameter kann aber auch ein anderer Betriebsplan für den Wärmeerzeuger 14 ermittelt werden. Dieser ist in der unteren Graphik in Fig. 5 in Form eines Leistungsverlaufes 57 dargestellt, der Zeiträume definiert, in denen der Wärmeerzeuger die Wärmeleistung H(t) in den Wärmespeicher einbringt. Dabei wird hier, abweichend zu dem oben beschriebenen, hinsichtlich eines optimalen Energieeinsatzes optimierten Betriebsplan, beispielhaft die für den prognostizierten regelmäßigen abendlichen Geschirrspülvorgang benötigte Wärmeenergiemenge (vergleiche die Ereignisse 42, 44 in Fig. 4) durch einen Betrieb des Wärmeerzeuger sowohl im Zeitraum 55 als auch im Zeitraum 56 bereit gestellt. Zwar werden dann durch den Betrieb im Zeitraum 55 Leerlaufverluste erzeugt, die aber dann in Kauf genommen werden, wenn in diesem Zeitraum 55 beispielsweise Energie zu besonders niedrigen Energiebezugspreisen oder eine besonders hohe Leistung einer den Wärmeerzeuger 14 versorgenden erneuerbaren Energieerzeugungsanlage verfügbar ist und die Optimierung des Betriebsplan hinsichtlich minimaler Betriebskosten als vorrangiges Ziel definiert wurde.

Zusammenfassend lassen sich über das Temperaturmodell mögliche Betriebspläne ermitteln, die angeben, in welchen Zeitbereichen der Wärmeerzeuger 14 zur Wassererwärmung betrieben werden muss und in welchen er betrieben werden könnte. Ebenfalls lässt sich ermitteln, wie viel Energie bei Durchführung der jeweils möglichen Betriebspläne zum Betrieb des Wärmeerzeugers 14 benötigt wird und wie viel Energie dabei z.B. durch die Speicherung jeweils verloren geht (z.B. Wärmeverluste durch die Speicherwand oder Warmwasserkreislauf). Die Ansteuerung der Zirkulationspumpe eines Warmwasserkreislaufes kann ebenfalls anhand des Betriebsplanes angesteuert werden, wobei nur bei erwarteter Nutzung Warmwasser zirkuliert wird, was zu doppelter Energieeinsparung führt.

Insgesamt stehen dem Verfahren vor allem durch die Nutzung des generischen Modells, dessen Abgleich mit der Realität und der Ermittlung von Ladezustand des Wärmespeichers und aktueller sowie prognostizierter Energieentnahme und ausreichend Informationen zur Verfügung, um eine noch bessere Planung zu berechnen, in der z.B. die Aufladung der Wärmespeicher so spät wie möglich passiert, aber noch zu guten Kostenbedingungen. Es kann also der optimale Kompromiss zwischen einer zeitlich früheren und einer späteren Aufladung ermittelt und umgesetzt werden. Dabei offenbart das neue Verfahren Methoden, wie die relevanten Informationen ermittelt werden. Es gelingt ein realistisches Bild aller Temperaturen im Wärmespeicher zu erstellen und auf diesem Weg nicht nur die im Wärmespeicher befindliche Wärmemenge abzuschätzen, sondern auch den für den Kunden nutzbaren Anteil davon zu bestimmen. Weiterhin kann ein Verbrauchsprofil und damit die voraussichtliche Wärmemengenentnahme anhand der Energieentnahmeinformationen erlernt werden, und es sind Methoden offenbart, die durch Nutzung der aus dem generischen Modell erkennbaren Freiheitsgrade zur Optimierung hinsichtlich verschiedener Optimierungsziele durch Lastverschiebung verwendbar sind. Darüber hinaus ist das Verfahren zur Einbindung des Wärmeerzeugungs- und speichersystems in einen übergeordneten Laststeuerungsalgorithmus geeignet.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### Bezugszeichenliste

- 1 - 7: Schichten
- 10: Warmwasserspeicher
- 11: Isolation
- 12: Zufluss
- 13: Entnahmestelle
- 14: Wärmeerzeuger
- 15: Temperatursensor
- 31, 32, 40: Temperaturverlauf
- 41 - 44: Ereignis einer Wärmeentnahme
- 51: Zeitverlauf eines Wärmeenergiebedarfs
- 52: Zeitverlauf einer Wärmeenergieentnahme
- 53, 55, 56: Zeitraum einer Wärmeenergiezufuhr
- 57: Leistungsverlauf

## Patentansprüche

1. Verfahren zum Betrieb eines Systems zur Bereitstellung von Wärme umfassend einen von einer Photovoltaik-Anlage gespeisten Wärmeerzeuger (14), einen Wärmespeicher (10) mit einer Messeinrichtung (15) zur Bestimmung der Temperatur an einem Punkt im Wärmespeicher oder in einer daran angeschlossenen Rohrleitung und einer Kommunikationsverbindung zu einer die Verwendung der elektrischen Leistung der PV-Anlage verwaltenden Steuereinrichtung, wobei das Verfahren **gekennzeichnet ist durch** die Schritte:
- Ermitteln einer von dem Wärmeerzeuger (14) in den Wärmespeicher (10) eingebrachten Energiemenge
- Ermitteln eines Zeitverlaufes einer an einer Entnahmestelle aus dem Wärmespeicher (15) entnommenen Energiemenge,
- Ermitteln eines Ladezustandes des Wärmespeichers (10),
- Erstellen einer Prognose eines Zeitverlaufes einer zukünftigen Energieentnahme (52) an der Entnahmestelle und
- Erstellen eines Betriebsplanes für den Wärmeerzeuger (14) anhand von mindestens einem der Parameter Temperatur, Ladezustand und prognostizierter Energieentnahme (52).

2. Verfahren nach Anspruch 1, **dadurch gekennzeichnet, dass** eine Verlustleistung des Wärmespeichers (10) aus einem Zeitverlauf (31,32,40) der gemessenen Temperatur in einem Zeitraum ohne Energieentnahme aus dem Wärmespeicher (10) und ohne Energiezufuhr in den Wärmespeicher (10) ermittelt wird, wobei der Zeitraum aus Informationen über den Betriebszustand der Wärmerzeuger (14) und aus Informationen über an die Entnahmestellen angeschlossene Verbraucher ermittelt wird.

3. Verfahren nach einem der vorangehenden Ansprüche, **dadurch gekennzeichnet, dass** die an der Entnahmestelle dem Wärmespeicher (10) entnommene Energiemenge anhand einer Auswertung der Temperaturdifferenzen im Zeitverlauf (31, 32, 40) der gemessenen Temperatur relativ zum Zeitverlauf (31, 32, 40) der gemessenen Temperatur in einem Zeitraum ohne Energieentnahme ermittelt wird.

4. Verfahren nach einem der vorangehenden Ansprüche, **dadurch gekennzeichnet, dass** zum Ermitteln des Ladezustandes des Wärmespeichers (10) ein generisches Modell des Wärmespeichers (10) verwendet wird, wobei das generische Modell durch ein Lernverfahren an ein reales Verhalten des Wärmespeichers (10) unter Verwendung des Zeitverlaufes (31,32,40) der gemessenen Temperatur angepasst wird, wobei das generische Modell Informationen über die von dem Wärmeerzeuger (14) in den Wärmespeicher (10) eingebrachte Energiemenge, über einen Zeitverlauf (57) der eingebrachten Wärmeleistung und/oder Informationen über die dem Wärmespeicher (10) entnommene Energiemenge enthält.

5. Verfahren nach Anspruch 4, **dadurch gekennzeichnet, dass** die Informationen über die in den Wärmespeicher (10) eingebrachte und/oder die dem Wärmespeicher (10) entnommene Energiemenge Messwerte einer Durchflussrate durch und/oder einer Temperatur in den an den Wärmespeicher (10) angeschlossenen Rohrleitungen umfassen und/oder aus an das generische Modell übermittelten Betriebsdaten der entsprechenden Wärmeerzeuger (14) bzw. Verbraucher ermittelt werden.

6. Verfahren nach einem der vorangehenden Ansprüche, **dadurch gekennzeichnet, dass** in einem zusätzlichen Schritt definierte Energiemengen von den Wärmeerzeugern (14) in den Wärmespeicher (10) eingebracht und/oder von den Verbrauchern aus dem Wärmespeicher (10) entnommen werden.

7. Verfahren nach einem der vorangehenden Ansprüche, **dadurch gekennzeichnet, dass** der voraussichtliche Zeitverlauf (52) der zukünftigen Energieentnahme anhand einer statistischen Auswertung der ermittelten Zeitverläufe (43, 44) der in der Vergangenheit entnommenen Energiemengen ermittelt wird.

8. Verfahren nach einem der vorangehenden Ansprüche, **dadurch gekennzeichnet, dass** der Betriebsplan unter Berücksichtigung mindestens eines aktuellen und/oder prognostizierten Energiebezugspreises oder mindestens einer aktuellen und/oder prognostizierten Leistung einer die Wärmeerzeuger (14) versorgenden erneuerbaren Energieerzeugungsanlage für den Betrieb der Wärmeerzeuger (14) erstellt wird, wobei aktuelle und geplante Betriebszustände weiterer Verbraucher bei der Optimierung des Betriebsplanes berücksichtigt werden.

9. Verfahren nach einem Ansprüche 4 bis 8, **dadurch gekennzeichnet, dass** der Betriebsplan anhand der im generischen Modell enthaltenen Freiheitsgrade hinsichtlich eines optimalen Energieeinsatzes oder hinsichtlich minimaler Betriebskosten optimiert wird.

10. System zur Bereitstellung von Wärme, umfassend:
- einen Wärmespeicher (10),
- einen von einer Photovoltaik-Anlage gespeisten Wärmeerzeuger (14) zur Energieübertragung in den Wärmespeicher,
- einer Messeinrichtung (15) zur Bestimmung einer Temperatur im Wärmespeicher (10) oder in einer daran angeschlossenen Rohrleitung,
- einer Entnahmestelle zur Versorgung von Verbrauchern mit Wärmeenergie, **dadurch gekennzeichnet, dass**
- das System eine Steuereinrichtung für den Wärmeerzeuger (14) aufweist,
- wobei das System weiterhin eine Kommunikationsverbindung zu einer die Verwendung der elektrischen Leistung der Photovoltaik-Anlage verwaltenden Steuereinrichtung umfasst,
- wobei die Steuereinrichtung zur Ermittlung eines Ladezustandes des Wärmespeichers (10) eingerichtet ist,
- die Steuereinrichtung zur Erstellung einer Prognose (52) eines Zeitverlaufes einer zukünftigen Energieentnahme eingerichtet ist, und
- die Steuereinrichtung zur Erstellung eines Betriebsplanes für den oder die Wärmeerzeuger (14) anhand von mindestens einem der Parameter Temperatur, Ladezustand und prognostizierter Energieentnahme (52) eingerichtet ist.

11. System nach einem der Ansprüche 10 bis 11, **dadurch gekennzeichnet, dass** das System Kommunikationsschnittstellen umfasst, die zur Übermittlung von Steuerbefehlen an daran angeschlossene Wärmeerzeuger (14) beziehungsweise Verbraucher, zur Übermittlung von Betriebsdaten von daran angeschlossenen Wärmeerzeuger (14) beziehungsweise Verbraucher an das System und/oder zum Empfang von Informationen über Energiebezugspreise für den Betrieb der Wärmeerzeuger (14) eingerichtet sind.

## Claims

1. Method for operating a system for providing heat, comprising a heat generator (14) fed by a photovoltaic installation, a heat store (10) having a measuring device (15) for determining the temperature at a point in the heat store or in a pipeline connected thereto, and a communications link to a control device managing the use of the electrical output from the PV installation, wherein the method is **characterized by** the steps:
- determining a quantity of energy introduced into the heat store (10) by the heat generator (14),
- determining a time profile of a quantity of energy removed from the heat store (15) at a removal point,
- determining a state of charge of the heat store (10),
- creating a forecast of a time profile of a future energy removal (52) at the removal point, and
- creating an operating plan for the heat generator (14) by using at least one of the parameters temperature, state of charge and forecast energy removal (52).

2. Method according to Claim 1, **characterized in that** a power loss from the heat store (10) is determined from a time profile (31, 32, 40) of the measured temperature in a time period without any removal of energy from the heat store (10) and without any supply of energy into the heat store (10), wherein the time period is determined from information about the operating state of the heat generator (14) and from information about loads connected to the removal points.

3. Method according to one of the preceding claims, **characterized in that** the quantity of energy removed from the heat store (10) at the removal point is determined by using an evaluation of the temperature differences in the time profile (31, 32, 40) of the measured temperature relative to the time profile (31, 32, 40) of the measured temperature in a time period without any removal of energy.

4. Method according to one of the preceding claims, **characterized in that** for the determining of the state of charge of the heat store (10), a generic model of the heat store (10) is used, wherein the generic model is adapted by means of a learning method to a real behaviour of the heat store (10) by using the time profile (31, 32, 40) of the measured temperature, wherein the generic model contains information about the quantity of energy introduced into the heat store (10) by the heat generator (14), about a time profile (57) of the heat output introduced and/or information about the quantity of energy removed from the heat store (10).

5. Method according to Claim 4, **characterized in that** the information about the quantity of energy introduced into the heat store (10) and/or removed from the heat store (10) comprises measured values of a flow rate through and/or of a temperature in the pipelines connected to the heat store (10) and/or are determined from operating data about the corresponding heat generator (14) and loads which are transmitted to the generic model.

6. Method according to one of the preceding claims, **characterized in that**, in an additional step, defined quantities of energy are introduced into the heat store (10) by the heat generators (14) and/or are removed from the heat store (10) by the loads.

7. Method according to one of the preceding claims, **characterized in that** the anticipated time profile (52) of the future energy removal is determined by using a statistical evaluation of the determined time profiles (43, 44) of the quantities of energy removed in the past.

8. Method according to one of the preceding claims, **characterized in that** the operating plan for the operation of the heat generator (14) is created whilst taking into account at least one current and/or forecast energy purchase price or at least one current and/or forecast power from a renewable energy generation installation supplying the heat generator (14), wherein current and planned operating states of further loads are taken into account during the optimization of the operating plan.

9. Method according to one of Claims 4 to 8, **characterized in that** the operating plan is optimized with regard to an optimal use of energy or with regard to minimum operating costs by using the degrees of freedom contained in the generic model.

10. System for providing heat, comprising:
- a heat store (10),
- a heat generator (14), fed by a photovoltaic installation, for transferring energy into the heat store,
- a measuring device (15) for determining a temperature in the heat store (10) or in a pipeline connected thereto,
- a removal point for supplying loads with thermal energy,
**characterized in that**
- the system has a control device for the heat generator (14),
- wherein the system further comprises a communications link to a control device managing the use of the electrical output of the photovoltaic installation,
- wherein the control device is configured to determine a state of charge of the heat store (10),
- the control device is configured to create a forecast (52) of a time profile of a future energy removal, and
- the control device is configured to create an operating plan for the heat generator or generators (14) by using at least one of the parameters of temperature, state of charge and forecast energy removal (52).

11. System according to one of Claims 10 to 11, **characterized in that** the system comprises communications interfaces which are configured to transmit control commands to the heat generator (14) and loads connected thereto, to transmit operating data from heat generators (14) and loads connected thereto to the system and/or to receive information about energy purchase prices for the operation of the heat generator (14).

## Revendications

1. Procédé de conduite d'un système de préparation de chaleur comprenant un générateur de chaleur (14) alimenté par une installation photovoltaïque, un accumulateur de chaleur (10) doté d'un dispositif de mesure (15) qui détermine la température en un point de l'accumulateur de chaleur ou dans un conduit tubulaire qui y est raccordé et une installation de communication avec un dispositif de commande gérant l'utilisation de la puissance électrique de l'installation photovoltaïque,
le procédé étant **caractérisé par** les étapes qui consistent à:
déterminer la quantité d'énergie apportée par le générateur de chaleur (14) dans l'accumulateur de chaleur (10),
déterminer l'évolution dans le temps de la quantité d'énergie prélevée dans l'accumulateur de chaleur (15) en un emplacement de prélèvement,
déterminer l'état de charge de l'accumulateur de chaleur (10),
établir un pronostic de l'évolution dans le temps du prélèvement futur d'énergie (52) à l'emplacement de prélèvement et
établir un plan de conduite du générateur de chaleur (14) à l'aide d'au moins l'un des paramètres température, état de charge et prélèvement d'énergie (52) pronostiqué.

2. Procédé selon la revendication 1, **caractérisé en ce que** la puissance de perte de l'accumulateur d'énergie (10) est déterminée à partir de l'évolution (31, 32, 40) dans le temps de la température mesurée au cours d'un intervalle de temps sans prélèvement d'énergie dans l'accumulateur de chaleur (10) et sans apport d'énergie dans l'accumulateur de chaleur (10), l'intervalle de temps étant déterminé à partir d'informations concernant l'état de fonctionnement du générateur de chaleur (14) et d'informations concernant les consommateurs raccordés aux emplacements de prélèvement.

3. Procédé selon l'une des revendications précédentes, **caractérisé en ce que** la quantité d'énergie prélevée dans l'accumulateur de chaleur (10) aux emplacements de prélèvement est déterminée à partir d'une évaluation des différences de température dans l'évolution (31, 32, 40) dans le temps de la température mesurée par rapport à l'évolution (31, 32, 40) dans le temps de la température mesurée pendant un intervalle de temps sans prélèvement d'énergie.

4. Procédé selon l'une des revendications précédentes, **caractérisé en ce qu'**un modèle générique de l'accumulateur de chaleur (10) est utilisé pour déterminer l'état de charge de l'accumulateur de chaleur (10), le modèle générique étant adapté par un processus d'apprentissage au comportement réel de l'accumulateur de chaleur (10) en utilisant l'évolution (31, 32, 40) dans le temps de la température mesurée, le modèle générique contenant des informations sur la quantité d'énergie apportée par le générateur de chaleur (14) dans l'accumulateur de chaleur (10), sur l'évolution (57) dans le temps de la puissance thermique introduite et/ou des informations sur la quantité d'énergie prélevée dans l'accumulateur de chaleur (10).

5. Procédé selon la revendication 4, **caractérisé en ce que** les informations sur la quantité d'énergie apportée dans l'accumulateur de chaleur (10) et/ou prélevée dans l'accumulateur de chaleur (10) comprennent des valeurs de mesure du débit de passage et/ou de la température dans les conduits tubulaires raccordés à l'accumulateur de chaleur (10) et/ou des données de fonctionnement, transmises au modèle générique, des générateurs de chaleur (14) ou consommateurs concernés.

6. Procédé selon l'une des revendications précédentes, **caractérisé en ce que** dans une étape supplémentaire, des quantités d'énergie définies sont apportées par les générateurs de chaleur (14) dans l'accumulateur de chaleur (10) et/ou sont prélevées par les consommateurs dans l'accumulateur ce chaleur (10).

7. Procédé selon l'une des revendications précédentes, **caractérisé en ce que** l'évolution prévisible (52) dans le temps du prélèvement futur d'énergie est déterminée à l'aide d'une évaluation statistique des évolutions (43, 44) dans le temps qui ont été déterminées pour les quantités d'énergie prélevées dans le passé.

8. Procédé selon l'une des revendications précédentes, **caractérisé en ce que** le plan de conduite du fonctionnement des générateurs de chaleur (14) est établi en tenant compte d'au moins un prix de référence actuel et/ou prévu de l'énergie ou d'au moins une puissance actuelle et/ou prévue d'une installation de production d'énergie renouvelable qui alimente les générateurs de chaleur (14), les états de fonctionnement actuels ou planifiés d'autres consommateurs étant pris en compte dans l'optimisation du plan de conduite.

9. Procédé selon l'une des revendications 4 à 8, **caractérisé en ce que** le plan de conduite est optimisé à l'aide des degrés de liberté que contient le modèle générique pour l'optimisation de l'utilisation de l'énergie ou la minimisation des coûts de fonctionnement.

10. Système de préparation de chaleur comprenant:
un accumulateur de chaleur (10),
un générateur de chaleur (14) alimenté par une installation photovoltaïque et conçu pour transférer de l'énergie dans l'accumulateur de chaleur,
un dispositif de mesure (15) qui détermine une température dans l'accumulateur de chaleur (10) ou dans un conduit tubulaire qui y est raccordé,
un emplacement de prélèvement qui alimente des consommateurs en énergie thermique,
**caractérisé en ce que**
le système présente un dispositif de commande du générateur de chaleur (14),
**en ce que** le système comprend en outre une liaison de communication avec un dispositif de commande qui gère l'utilisation de la puissance électrique de l'installation photovoltaïque,
**en ce que** le dispositif de commande est conçu pour déterminer un état de charge de l'accumulateur de chaleur (10),
**en ce que** le dispositif de commande est conçu pour établir un pronostic (52) de l'évolution dans le temps d'un prélèvement futur d'énergie et
**en ce que** le dispositif de commande est conçu pour établir un plan de conduite du ou des générateurs de chaleur (14) à l'aide d'au moins l'un des paramètres température, état de charge et prélèvement (52) d'énergie pronostiqué.

11. Système selon l'une des revendications 10 à 11, **caractérisé en ce que** le système comporte des interfaces de communication qui sont conçues pour transmettre des ordres de commande à des générateurs de chaleur (14) ou à des consommateurs qui y sont raccordés, pour transmettre des données de fonctionnement des générateurs de chaleur (14) ou des consommateurs qui y sont raccordés au système et/ou pour recevoir des informations concernant les prix de référence de l'énergie utilisés pour conduire les générateurs de chaleur (14).
